(19)

Europäisches
Patentamt
European
Patent Office
Office européen
des brevets

(11) **EP 2 927 721 A1**

(12) **EUROPEAN PATENT APPLICATION**
published in accordance with Art. 153(4) EPC

(43) Date of publication:
**07.10.2015 Bulletin 2015/41**

(21) Application number: **13857768.9**

(22) Date of filing: **22.11.2013**

(51) Int Cl.:
**G02B 6/40** *(2006.01)*      **G02B 6/122** *(2006.01)*
**G02B 6/30** *(2006.01)*

(86) International application number:
**PCT/JP2013/081524**

(87) International publication number:
**WO 2014/084142 (05.06.2014 Gazette 2014/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **30.11.2012   JP 2012263479**

(71) Applicant: **Sumitomo Bakelite Co., Ltd.
Shinagawa-ku
Tokyo 140-0002 (JP)**

(72) Inventors:
• **FUJIWARA Daisuke
  Shinagawa-ku, Tokyo 140-0002 (JP)**
• **FUJIWARA Makoto
  Shinagawa-ku, Tokyo 140-0002 (JP)**
• **KATO Masaaki
  Shinagawa-ku, Tokyo 140-0002 (JP)**

(74) Representative: **Ter Meer Steinmeister & Partner
Patentanwälte mbB
Nymphenburger Straße 4
80335 München (DE)**

(54)    **OPTICAL WIRING COMPONENT AND ELECTRONIC DEVICE**

(57)    The object of the present invention is to provide an optical wiring part which can connect the optical waveguide and another optical element with high optical coupling efficiency while inhibiting the decrease of the transmission loss, and an electronic device with high reliability including the optical wiring part, the present invention provides an optical wiring part including a tape-shaped optical waveguide and a ferrule having a penetration hole which is formed from a base end to a tip end of the ferrule, and a part of the optical waveguide in a longitudinal direction is inserted into the penetration hole, wherein at least one main surface of two main surfaces of the optical waveguide is fixed to an inner wall of the penetration hole, and there is a clearance between the inner wall of the penetration hole and two side surfaces of the optical waveguide.

FIG. 3A

EP 2 927 721 A1

## Description

TECHNICAL FIELD

The present invention relates to an optical wiring part and an electronic device.

Priority is claimed on Japanese Patent Application No. 2012-263479, filed November 30, 2012, the content of which is incorporated herein by reference.

BACKGROUND ART

An optical communication technique for transferring data using optical carrier waves has been developed. In recent years, an optical waveguide or an optical fiber has been spreading as a means for transferring the optical carrier waves from one point to the other point. The optical waveguide includes a linear core portion and a clad portion disposed around the core portion. The core portion is made of a material which is substantially transparent to the light of the optical carrier wave. The clad portion is made of a material having a refractive index lower than that of the material of the clad portion.

In the optical waveguide, light, which is introduced into the core portion from one end of the core portion, is reflected at the boundary between the core portion and the clad portion, and transferred to the other end of the core portion. A light emitting element, such as a semiconductor laser, is disposed at a light input side of the optical waveguide. A light receiving element, such as a photodiode, is disposed at a light output side. Light from the light emitting element is transferred through the optical waveguide, and received by the light receiving element. The optical communication is carried out based on a flickering pattern or an intensity variation pattern of the received light.

Currently, the optical waveguide is generally used for short-distance light communication, whereas an optical fiber is used for long-distance light communication. Therefore, it is possible to connect a local network and a backbone network by connecting between the optical waveguide and the optical fiber.

When the optical waveguide and the optical fiber are connected, an end surface of the optical waveguide and an end surface of the optical fiber, for example, are abutted and the abutting state is maintained (For example, Patent Document 1). A connection mechanism, in which the waveguide and the optical fiber can be engaged with each other, is used to maintain the abutting state. Specifically, a first ferrule which holds the end surface of the optical waveguide and a second ferrule which holds the end surface of the optical fiber are connected by fitting an alignment pin into a fitting hole.

The optical waveguide disclosed in Patent Document 1 has a tape shape, and the lower surface of the tape-shaped optical waveguide is adhered to a substrate. The first ferrule has an optical wiring-housing groove. The first ferrule is fixed to the substrate in a state that the optical waveguide is housed in the optical wiring-housing groove. Thereby, the upper surface and the side surfaces at end portion of the optical waveguide are covered with the first ferrule, and the lower surface at an end portion of the optical waveguide is covered with the substrate. Furthermore, the first ferrule is fixed by filing a space between the optical waveguide and the optical wiring-housing groove with an adhesive agent.

As explained above, the lower surface of the optical waveguide is fixed to the substrate, and the upper surface and the side surfaces of the optical waveguide are fixed to the first ferrule using an adhesive agent in Patent Document No. 1. When the first ferrule is subjected to an acceleration test, such as, for example, a heat cycle test, or put in a high temperature and high humidity environment, the transmission efficiency of the optical waveguide may be decreased near the first ferrule, and the optical coupling efficiency between the optical waveguide and the optical fiber may be decreased. In general, it is known that the transmission loss becomes large by the addition of pressure.

PRIOR ART DOCUMENT

PATENT DOCUMENT

[Patent Document 1] Japanese Unexamined Patent Application, First Publication No. 2011-75688

SUMMARY OF INVENTION

TECHNICAL PROBLEM

The present inventors conducted diligent research to find the mechanism for increasing the transmission loss, and measures to limit the increase of the transmission loss. Then, the present inventors found that during the acceleration test or under a high temperature and high humidity environment, stress is concentrated by the difference in a linear expansion coefficient between the optical waveguide and the ferrule, and the stress concentration increases the transmission loss. Then, the present inventors found that the increase of the transmission loss can be inhibited by making an adequate clearance between the optical waveguide and the ferrule, maintaining the stable connection state between them, and reducing the stress concentration in the optical wavelength. Thereby, the present invention can be achieved.

The object of the present invention is to provide an optical wiring part which can connect the optical waveguide and another optical element with high optical coupling efficiency while inhibiting the decrease of the transmission loss, and an electronic device with high reliability including the optical wiring part.

SOLUTION TO PROBLEM

This object can be achieved by the following present inventions (1) to (7).

(1) An optical wiring part including a tape-shaped optical waveguide and a ferrule having a penetration hole which is formed from a base end to a tip end of the ferrule, and a part of the optical waveguide in a longitudinal direction is inserted into the penetration hole,
wherein at least one main surface of two main surfaces of the optical waveguide is fixed to an inner wall of the penetration hole, and there is a clearance between the inner wall of the penetration hole and two side surfaces of the optical waveguide.
(2) The optical wiring part according to (1), wherein the ferrule includes a main body having a groove which is a part of the penetration hole, and a lid body which forms the penetration hole together with the groove by covering an opening of the groove, and
one main surface of two main surfaces of the optical waveguide is fixed to an inner wall of the groove, and the other main surface of the optical waveguide is fixed to the lid body.
(3) The optical wiring part according to (2), wherein the lid body covers the opening of the groove in a state that at least a part of the lid body is housed in the groove.
(4) The optical wiring part according to (3), wherein the lid body is positioned apart from the inner wall of the groove.
(5) The optical wiring part according to (1), wherein the ferrule includes a main body having a groove which is a part of the penetration hole, and a lid body which forms the penetration hole together with the groove by covering an opening of the groove, and
the lid body is fixed to the main body except that the groove.
(6) An optical wiring part including a tape-shaped optical waveguide and a ferrule having a groove which is formed from a base end to a tip end of the ferrule, and a part of the optical waveguide in a longitudinal direction is inserted into the groove,
wherein at least one main surface of two main surfaces of the optical waveguide is fixed to an inner wall of the groove, and there is a clearance between the inner wall of the groove and two side surfaces of the optical waveguide.

An electronic device including the optical wiring part according to any one of (1) to (6).

ADVANTAGEOUS EFFECTS OF INVENTION

According to the present invention, an optical wiring part, which can connect the optical waveguide and another optical element with high optical coupling efficiency while inhibiting the decrease of the transmission loss, can be provided.
In addition, according to the present invention, an electronic device with high reliability including the optical wiring part can also be provided.

BRIEF DESCRIPTION OF DRAWINGS

FIG. 1 is a perspective view showing an optical wiring part of the first embodiment according to the invention.
FIG. 2 is a perspective view showing a ferrule in the optical wiring part shown in FIG. 1.
FIG. 3A is a sectional view showing the optical wiring part of the first embodiment which is taken along line A-A of FIG. 1.
FIG. 3B is a sectional view showing the optical wiring part of the first embodiment which is taken along line B-B of FIG. 1.
FIG. 4 is an enlarged perspective view showing only the optical waveguide in the optical wiring part shown in FIG. 1.
FIG. 5 is a perspective view showing an optical wiring part of the second embodiment according to the invention.
FIG. 6A is a sectional view showing the optical wiring part of the second embodiment which is taken along line A-A of FIG. 5.

FIG. 6B is a sectional view showing the optical wiring part of the second embodiment which is taken along line B-B of FIG. 5.

FIG. 7A is a sectional view showing an optical wiring part of the third embodiment according to the invention when the ferrule is cut in an orthogonal direction relative to a longitudinal direction of the ferrule.

FIG. 7B is a sectional view showing an optical wiring part of the third embodiment according to the invention when the ferrule is cut in a longitudinal direction of the ferrule.

FIG. 8 is a sectional view showing an alternative optical wiring part shown in FIG. 7 when the ferrule is cut in an orthogonal direction relative to a longitudinal direction of the ferrule.

FIG. 9A is a sectional view showing an optical wiring part of the fourth embodiment according to the invention when the ferrule is cut in an orthogonal direction relative to a longitudinal direction of the ferrule.

FIG. 9B is a sectional view showing an optical wiring part of the fourth embodiment according to the invention when the ferrule is cut in a longitudinal direction of the ferrule.

## DESCRIPTION OF EMBODIMENTS

Below, the optical wiring part and electronic device according to the present invention will be explained in detail with reference to the preferred embodiments.

<Optical wiring part>

First embodiment

First, the first embodiment of the optical wiring part will be explained.

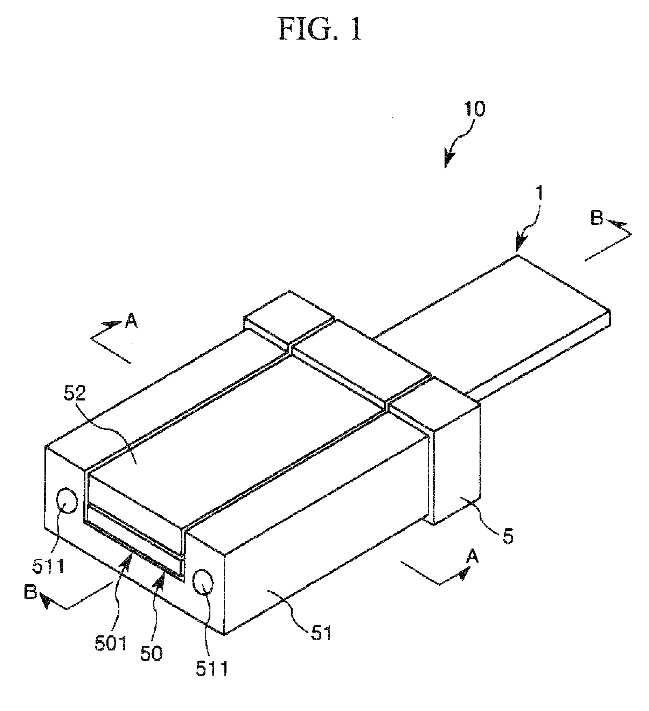

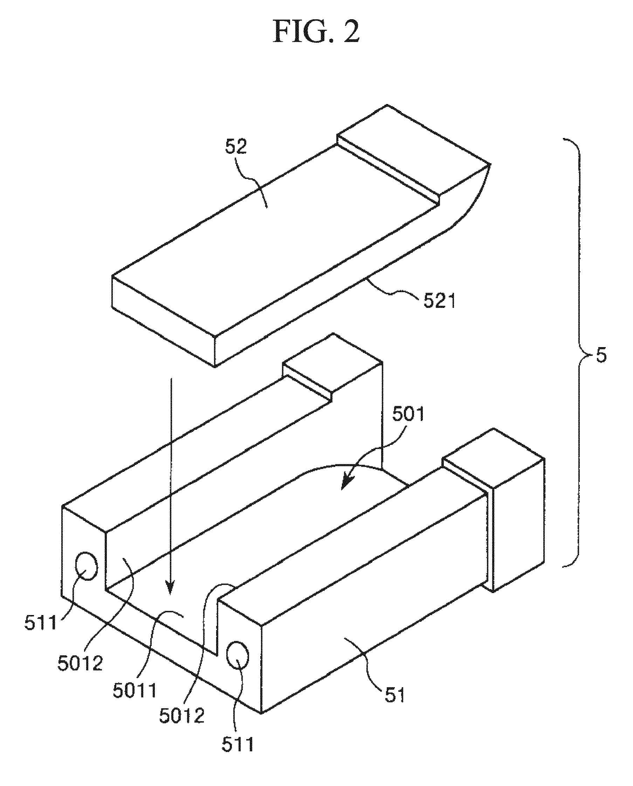

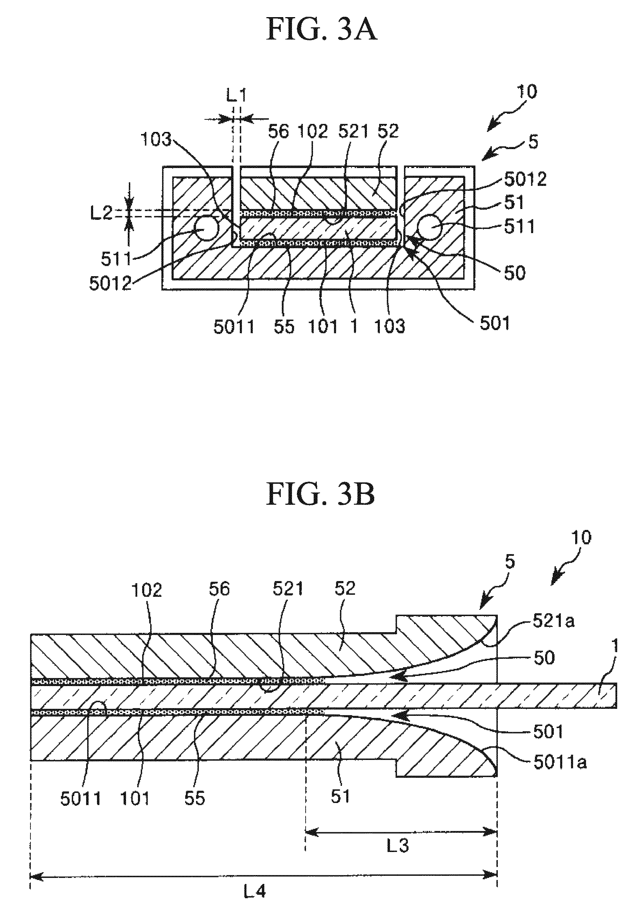

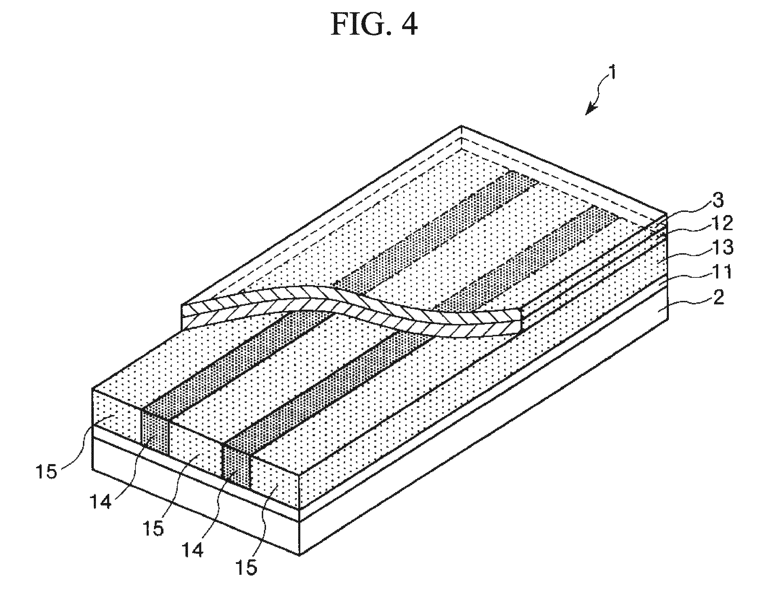

FIG. 1 is a perspective view showing an optical wiring part of the first embodiment according to the invention. FIG. 2 is a perspective view showing a ferrule in the optical wiring part shown in FIG. 1. FIG. 3A and 3B are a sectional view of the optical wiring part which is taken along line A-A and line B-B of FIG. 1. FIG. 4 is an enlarged perspective view showing only the optical waveguide in the optical wiring part shown in FIG. 1. Moreover, the up side in Fig. 3 is represented by "up side" and the down side in Fig. 3 is represented by "down side" in the following descriptions.

The optical wiring part 10 shown in FIG. 1 includes an optical waveguide 1, and a ferrule 5 which is provided at the end of the optical waveguide 1.

The optical waveguide 1 shown in FIG. 1 has a long tape shape having a cross-sectional shape of which the thickness is smaller than the width. The optical waveguide 1 transmits optical signals between one end and the other end in the longitudinal direction. Moreover, figures of the present application show only the vicinity of one end of the optical waveguide 1, and omit the other end of the optical waveguide 1. However, the vicinity of the other end of the optical waveguide 1 has the same structure as that of one end of the optical waveguide 1. In addition, "one end" and "one end surface" of the optical waveguide 1 shown in figures may be represented by "tip end", and "tip end surface" in the present description.

As shown in FIG. 4, the optical waveguide 1 is a laminate having a clad layer 11, a core layer 13, and a clad layer 12, in this lamination order from the bottom. The core layer 13 shown in FIG. 4 has two long core portions 14 and 14 which are arranged in parallel and side clad portions 15, 15, and 15 which are adjacent to the side surfaces of each core portion 14.

At the tip end of the optical waveguide 1 shown in FIG. 1, a ferrule 5 is provided so as to cover the tip end of the optical waveguide 1. In other words, the ferrule 5 has a penetration hole 50. The tip end of the optical waveguide 1 is inserted into the penetration hole 50. One end surface of the ferrule 5 and the tip end surface of the optical waveguide 1 are aligned with each other. Moreover, "one end" and "one end surface" of the ferrule 5 in figures are represented by "tip end" and "tip end surface" in the present description. The other end of the ferrule 5 which is an insertion opening for the optical waveguide 1 is represented by "base end". The surface of the other end of the ferrule 5 is represented by "base end surface". The penetration hole 50 is formed in the ferrule 5 from the base end to the tip end.

As shown in FIG. 2, the ferrule 5 includes a main body 51 having a groove 501 formed from the tip end to the base end of the main body 51, a lid body 52 which is housed in the groove 501 and covers the upper opening of the groove 501. Moreover, FIG. 2 shows a state before covering the groove 501 with the lid body 51, that is, a disassembly state of the ferrule 5. Furthermore, a surface positioned at the bottom of the groove 501 is represented by a bottom surface 5011, two surfaces which stand upwardly from the bottom surface 5011 are represented by side surfaces 5012 and 5012 in the groove 501 shown in FIG. 2. The penetration hole 50 shown in FIG. 1 is formed by housing the lid body 52 in the groove 501. That is, the lower surface of the penetration hole 50 is formed by the bottom surface of the groove 501, both side surfaces of the penetration hole 50 are formed by the side surfaces of the groove 5012 and 5012, and the upper surface of the penetration hole 50 is formed by the lower surface 521 of the lid body 52. The optical wiring part 10 is produced by inserting the tip end of the optical waveguide 1 into the penetration hole 50, and fixing the optical wiring part 10 and the ferrule 5. Moreover, "the upper opening of the groove 501 is covered with the lid body 52" means that the lid body 52 is mounted so as to cover the upper opening and thereby the groove 501 is changed to substantial "a hole". At this time, it is not necessary that the main body 51 is in contact with the 1id body 52.

As shown in FIGS. 3A and 3B, the lower surface 101 at the tip end of the optical waveguide 1 is fixed to the bottom surface 5011 of the groove 501 by an adhesive layer 55 in the optical wiring part 10. In addition, the upper surface 102 at the tip end of the optical waveguide 1 is fixed to the bottom surface 521 of the lid body 52 by an adhesive layer 56. On the other hand, as shown in FIG. 3A, the both side surfaces 103 and 103 at the tip end of the optical waveguide 1 are positioned apart from an inner wall of the groove 501. There is a clearance between the both side surfaces 103 and 103 of the optical waveguide 1 and the side surfaces 5012 and 5012 of the groove 501 respectively. Therefore, in the optical wiring part 10 shown in FIG. 1, the lid body 52 is indirectly fixed to the main body 51 via the optical waveguide 1, not directly fixed to the main body 51.

As explained above, in the optical wiring part 10 shown in FIG. 1, both the two main surfaces of the tape-shaped optical waveguide 1 are fixed to the inner wall of the penetration hole 50 whilst both the side surfaces of the optical waveguide 1 are positioned apart from the inner wall of the penetration hole 50, and there is a clearance between both the side surfaces of the optical waveguide 1 and the inner wall of the penetration hole 50. In addition, the side surfaces of the lid body 52 are also positioned apart from the side surfaces 5012 and 5012 of the groove 501, and there is a clearance between them.

In other words, at the tip end of the tape-shaped optical waveguide 1 of the optical wiring part 10, the two main surfaces, that is, the lower surface 101 and the upper surface 102 are fixed to the inner wall of the penetration hole 50 by the adhesive layers 55 and 56, each of the two side surfaces 103 and 103 is positioned apart from the inner wall of the penetration hole 50, and there is a clearance between the two side surfaces of the optical waveguide 1 and the inner wall of the penetration hole 50. According to the optical wiring part 10 having such a structure, the increase of the transmission loss caused by the local stress concentration can be inhibited while the optical waveguide 1 and the ferrule 5 are reliably fixed. Thereby, it is possible to obtain high transmission efficiency of the optical waveguide 1 in the environment of large temperature change, and even in the environment of high humidity. The optical wiring part 1 which is in contact with another optical part with high transmission efficiency can be produced.

In addition, the lower surface 101 and the upper surface 102 occupy most of the surface area of the tip end of the tape-shaped optical waveguide 1. Therefore, the fixing state can be stably maintained for a long period of time by fixing the lower surface 101 and the upper surface 102 of the optical waveguide 1 to the inner wall of the penetration hole 50. As a result, the optical wiring part 10 having high reliability can be obtained.

In addition, the positioning of the lid body 52 in the groove 501 can be easily adjusted by housing the lid body 52 in the groove 501. Therefore, assembly operation is facilitated.

Furthermore, since the lid body 52 is indirectly fixed to the main body 51 via the optical waveguide 1, not directly fixed to the main body 51, the lid body 52 can move following the motion of the optical waveguide 1 while protecting the optical waveguide 1. In other words, the 1id body 52 can move independently from the main body 51. Therefore, the lid body 52 can protect the optical waveguide 1 without generating the stress concentration in the optical waveguide 1.

In addition, in the penetration hole 50 in this embodiment, the lower surface and both the side surfaces are formed by the groove 501 and the upper surface 502 is the lower surface 521 of the lid body 52. Therefore, when the optical waveguide 1 is inserted into the penetration hole 50, first, the optical waveguide 1 is housed in the groove 501, and then the lid 52 is mounted so as to cover the upper opening of the groove 501. That is, the optical waveguide 1 is housed in the penetration hole 50 while forming the penetration hole 50. Therefore, the assembly operation is facilitated compared with a case in which the optical waveguide 1 is inserted into the penetration hole 50.

The clearance L1 (as shown in FIG. 3A) between the side surface of the optical waveguide1 and the side surface 5012 of the groove 501 is suitably adjusted depending on the size of the optical waveguide 1 or the ferrule, and not particularly limited. However, the clearance L1 is preferably about 5 $\mu$m to about 1,000 $\mu$m, more preferably about 10 $\mu$m to about 750 $\mu$m, still more preferably about 15 $\mu$m to about 500 $\mu$m, and most preferably about 25 $\mu$m to about 350 $\mu$m. When the clearance L1 is in the above-identified range, it is possible to sufficiently inhibit a decrease of the transmission efficiency even in an environment of large temperature change, and a remarkable enlargement of the optical wiring part.

Moreover, the clearance L1 between the side surface of the optical waveguide 1 and the side surface 5012 of the groove 501 may be partially outside the above-identified range. In this case, the area of the region having the clearance L1 outside the above-identified range is preferably 30% or less relative to the total area of the side surface 5012 of the groove 501.

It is possible to improve the smoothness (slidability) between the optical waveguide 1 and the groove 501 by subjecting at least one of the side surface 103 of the optical waveguide 1 and the side surface 5012 of the groove 501 to a release treatment. Thereby, it is possible to obtain the effects explained above even when the clearance L1 is smaller than the above-identified range.

Specifically, it is possible to widen the range of the clearance L1 to 0.001 μm to 1,000 μm, more preferably 0.1 μm to 500 μm, and most preferably 1 μm to 200 μm by subjecting at least one of the side surface 103 of the optical waveguide 1 and the side surface 5012 of the groove 501 to a release treatment. Thereby, the possibility of the design freedom of the optical wiring part 10 as well as the stress concentration is certainly reduced.

Examples of the release treatment include a treatment in which a releasing agent is coated to a surface to be treated, a treatment in which a releasing agent is coated and a releasing layer is formed on a surface to be treated, and a surface modification treatment, such as a plasma treatment. Examples of the releasing agent include a fluorine-based releasing agent, a silicone-based releasing agent, a polyethylene-based releasing agent, a polypropylene-based releasing agent, a paraffin-based releasing agent, a montane-based releasing agent, and a carnauba-based releasing agent. The releasing agent can be used alone or combination of two or more.

Moreover, the clearance between the lid body 52 and the side surface 5012 of the groove 501 is the same as the clearance L1 explained above.

The clearance L2 (as shown in FIG. 3A) between the upper surface 102 of the optical wavelength 1 and the lower surface 521 of the lid body 52, that is, the thickness of the adhesive layer 56 is also adjusted depending on the size of the optical wavelength 1 and the ferrule 5. However, the clearance L2 is preferably about 10 μm to about 2,000 μm, more preferably about 15 μm to about 1,000 μm, still more preferably about 100 μm to about 1,000 μm, and most preferably about 300 μm to about 800 μm. It is possible to reliably fix the optical wavelength 1 to the ferrule 5 by setting the clearance L2 to be in the above-identified range.

Moreover, the clearance L2 between the upper surface 102 of the optical wavelength 1 and the lower surface 521 of the lid body 52 may be locally outside the above-identified range. In this case, the area of the region having the clearance L2 outside the above-identified range is preferably 30% or less relative to the total area of the upper surface 102 of the optical wavelength 1 or the lower surface 521 of the lid body 52.

In addition, the clearance L2 may be smaller, equal, or larger than the clearance L1. However, the clearance L2 is preferably about 30 to about 300%, and more preferably about 50 to about 200%, of the clearance L1. It is possible to reliably fix the optical wavelength 1 to the ferrule 5 by setting the clearances L1 and L2 to be in the above-identified range.

In addition, the thickness of the adhesive layer 55 formed on the upper surface 102 of the optical waveguide 1 may be different from the thickness of the adhesive layer 56 formed on the lower surface 101 of the optical waveguide 1. However, it is preferable that the thickness of the adhesive layer 55 equal to the thickness of the adhesive layer 56. In this case, it is possible to equalize the stiffness of the adhesive layer 55 and the adhesive layer 56, and reduce the stress concentration or the like caused by the difference of the stiffness.

Below, each component of the optical wiring part 10 will be explained in more detail.

(Optical waveguide)

The optical waveguide 1 is a long member having a tape-shape in plane view, and transmits optical signals from one end to the other end.

Two core portions 14 and 14 shown in FIG. 4 are covered with the clad portions (side clad portions 15, 15, and 15, and clad layers 11 and 12). Thereby, it is possible to transmit light while light is confined in the core portion 14.

The refractive index of the core portion 14 may be larger than the refractive index of the clad portion. The difference between the refractive index of the core portion 14 and the clad portion is preferably 0.3% or more, and more preferably 0.5% or more. The upper value of the difference between the refractive index of the core portion 14 and the clad portion is not particularly limited. However, the upper value is preferably about 5.5%. When the refractive index difference is less than the lower limit of the above-identified range, the transmission efficiency of light may be decreased. On the other hand, when the refractive index difference is more than the upper limit of the above-identified range, further improvement of the transmission efficiency is not desired.

The refractive index difference can be represented by the following equation when the refractive index of the core portion 14 is represented by A, and the refractive index of the clad portion is represented by B.

$$\text{Refractive Index Difference } (\%) = |(A/B) - 1| \times 100$$

The refractive index distribution in the width direction at the cross section of the core portion 14 may have any shapes. The refractive index distribution may be a so-called step index (SI) type distribution in which the refractive index discontinuously changes or a so-called graded index (GI) type distribution in which the refractive index continuously changes. When the SI type distribution is used, the refractive index distribution can be easily formed. When the GI type distribution is used, the possibility that optical signals are collected in the region having high refractive index increases, and the transmission efficiency is improved.

In addition, the core portion 14 may be straight or curved in the plan view. Furthermore, the core portion 14 may be branched or crossed on the route.

Moreover, the cross-sectional shape of the core portion 14 is not particular limited. Examples of the cross-sectional shape of the core portion 14 include a circle, such as a perfect circle, an oval, and an elliptical, a polygon, such as a triangle, a square, a pentagon, and a hexagon. However, when the cross-sectional shape of the core portion 14 is a square, the core portion 14 is easily produced.

The width and the height (that is, the thickness) of the core portion 14 are not particularly limited. However, the width and height of the core portion 14 are preferably about 1 $\mu$m to about 200 $\mu$m, more preferably about 5 $\mu$m to about 100 $\mu$m, and most preferably about 10 $\mu$m to about 70 $\mu$m. When the width and height of the core portion 14 are in the above-identified range, it is possible to increase the density of the core portion 14 while suppressing a decrease of the transmission efficiency of the optical waveguide 1.

When a plurality of core portions 14 are positioned in a line as shown in FIG. 4, the width of the side clad portions 15 between the core portions 14 and 14 is preferably about 5 $\mu$m to about 250 $\mu$m, more preferably about 10 $\mu$m to about 200 $\mu$m, and most preferably about 10 $\mu$m to about 120 $\mu$m. When the width of the side clad portions 15 is in the above-identified range, it is possible to increase the density of the core portion 14 while suppressing the crosstalk of optical signals between the core portions 14 and 14.

Examples of a constituent material (main material) of the core layer 13 include a resin, for example, cyclic ether-base resin, such as an acrylic-based resin, a methacrylic-based resin, polycarbonate, polystyrene, an epoxy-based resin, and an oxetane-based resin, polyamide, polyimide, polybenzoxazole, polysilane, polysilazane, a silicone-based resin, a fluorine-based resin, polyurethane, a polyolefin-based resin, polybutadiene, polyisoprene, polychloroprene, polyester, such as PET and PBT, polyethylene succinate, polysulfone, polyether, and a cyclic olefin-based resin, such as a benzocyclobutene-based resin, and a norbornene-based resin, and glass, such as quartz glass, and borosilicate glass. The resin material may be a composition containing two or more kinds of resins.

The average thickness of the clad layer 11 and 12 is preferably about 0.05 times to about 1.5 times as much as the average thickness of the core layer 13, and more preferably about 0.1 times to about 1.25 times. Specifically, the average thickness of the clad layer 11 and 12 is preferably about 1 $\mu$m to about 200 $\mu$m, more preferably about 3 $\mu$m to about 100 $\mu$m, and most preferably about 5 $\mu$m to about 60 $\mu$m. When the average thickness of the clad layer 11 and 12 is in the above-identified range, it is possible to maintain the functions of the clad portions while suppressing an increase of the thickness of the optical waveguide 1 to no more than necessary.

For example, as the constituent material of the clad layer 11 and 12 can be used as the same constituent material of the core layer 13. In particular, the clad layer 11 and 12 is preferably made of at least one selected from the group consisting of a (meth)acrylic-based resin, an epoxy-based resin, a silicone-based resin, a polyimide-based resin, a fluorine-based resin, and a polyolefin-based resin, and more preferably a (meth)acrylic-based resin or an epoxy-based resin.

In addition, the refractive index distribution in the thickness direction at the cross section of the optical waveguide 1 is not particularly limited. For example, the refractive index distribution may be a SI type or a GI type.

The width of the optical waveguide 1 is not particularly limited, and is preferably about 2 mm to about 100 mm, and more preferably about 3 mm to about 50 mm.

In addition, the number of the core portion 14 in the optical waveguide 1 is not particularly limited, and preferably about 1 to about 100. Moreover, when the number of the core portion 14 is large, the optical waveguide 1 can be multilayered if necessary. Specifically, the optical waveguide 1 can be multilayered by positioning the core layer and the clad layer alternately on the optical waveguide 1 shown in FIG. 4.

In addition, the optical waveguide 1 shown in FIG. 4 includes a support film 2 as a bottom layer and a cover film 3 as a top layer.

Examples of the constituent material of the support film 2 and the cover film 3 include resin, for example, polyolefin, such as polyethylene terephthalate (PET), polyethylene, and polypropylene, polyimide, and polyamide.

In addition, the average thickness of the support film 2 and the cover film 3 is not particularly limited. However, the average thickness of the support film 2 and the cover film 3 is preferably about 5 $\mu$m to about 500 $\mu$m and more preferably about 10 $\mu$m to about 400 $\mu$m. When the average thickness of the support film 2 and the cover film 3 is in the above-identified range, the support film 2 and the cover film 3 have suitable stiffness. Thereby, it is possible to reliably protect the core layer from external force or external environment while reliably supporting the core layer 13.

Moreover, the clad layer 11 and the support film2, and the clad layer 12 and the cover layer 3 are adhered by an adhesive agent, a tacky agent, an adhesive sheet, a tacky sheet, or thermocompression

(Ferrule)

The ferrule 5 is provided with a tope end of the optical waveguide 1. The ferrule 5 connects optically the optical waveguide 1 and another optical part. The ferrule 5 may contains a part confirming to various connector standard. Examples of the connector standard include small size (Mini) MT connector, and MT connector, 16 MT connector, two-dimensional array type MT connector, MPO collector, and MPX connector which are prescribed in JIS C 5981.

As shown in FIGS. 1 and 2, two guide holes 511 and 511 are formed at the tip end surface of the main body 51 of the ferrule 5 in this embodiment. The guide holes 511 and 511 are formed so as to penetrate from the base end surface to the tip end surface of the ferrule 5. When the optical wiring part 10 is connected to another optical part, guide pins of the other optical part are inserted into the guide holes 511 and 511. When the guide pins are inserted into the guide holes 511 and 511, both optical wiring part 10 and another optical part can be fixed. That is, the guide hole 511 is used as a connection mechanism configured to connect the optical waveguide 1 and another optical part.

The guide hole 511 is not always formed in the base end surface as long as the guide hole 511 is formed in the tip end surface.

In addition to the connection mechanism above, a locking structure using a claw, or an adhesive agent can be used to connect them.

The penetration hole 50 of the ferrule 5 may have the same cross sectional shape from the base end to tip end, or may have a different cross sectional shape in the middle.

As shown in FIG. 3B, the height of the penetration hole 50 gradually increases toward the base end surface in the ferrule 5 in this embodiment. Specifically, a part of the bottom surface 5011 at the base end side of the groove 501 is curved such that the inclination angle toward the lower side is gradually larger toward the base end. In other words, a curved surface 5011a is formed at a part of the bottom surface 5011 on the base end side, and the curvature is gradually increased toward the base end. In addition, a part of the bottom surface 521 of the lid body 52 on the base end side is curved such that the inclination angle toward the upper side is gradually larger toward the base end. In other words, a curved surface 521a is formed at a part of the bottom surface 521 on the base end side, and the curvature is gradually increased toward the base end.

As shown in FIG. 3B, when the penetration hole 50 has such a structure and the optical waveguide 1 is inserted into the penetration hole 50, the clearance between the optical waveguide 1 and the bottom surface 5011 of the groove 501, and the clearance between the optical waveguide 1 and the lower surface 521 of the lid body 52 are gradually increased toward the base end. When the ferrule 5 has the penetration hole 50 having such a structure, and external force which pulls the optical waveguide 1 upward or downward in FIG. 3B, is added, the optical waveguide 1 is curved along the bottom surface 5011 or the bottom surface 521. That is, the optical waveguide 1 is gently curved along the curved surface 5011a or the curved surface 521a. It is possible to inhibit the abrupt bending of the optical waveguide 1. As a result, it is possible to prevent the occurrence of problems, such as a decrease of the transmission efficiency or the disconnection, which are caused by the abrupt bending.

In addition, while the optical waveguide 1, to which external force is added, is in contact with the bottom surface 5011 of the groove 501 or the bottom surface 521 of the lid body 52, the optical waveguide 1 moves relatively freely in accordance with the external force. Thereby, since the external force can be easily released, it is possible to prevent the optical waveguide 1 from falling out from the penetration hole 50.

The length L3 of the curved surface 5011a in the bottom surface 5011 and the length L3 of the curved surface 521 in the bottom surface 521 are preferably about 5% to about 50% relative to the total length L4 of the ferrule 5, and more preferably about 10% to about 40%. When the length L3 relative to the length L4 is adjusted to be in the above-identified range, the optical wavelength 1 is reliably fixed to the ferrule 5 and high durability of the optical wiring part 10 can be obtained. In other words, when the ratio L3/L4 is less than the lower limit of the above-identified range, the tolerance to external force of the optical wiring part 10 may be decreased. In contrast, when the ratio L3/L4 is more than the upper limit of the above-identified range, the fixing force decreases, and fixation may be released by pulling the optical waveguide 1 with great force.

Examples of the constituent material of the ferrule 5 include resin, such as a phenol-based resin, an epoxy-based resin, an olefin-based resin, a urea-based resin, a melamine-based resin, and an unsaturated polyester-based resin, and a metal material such as stainless steel, and an aluminum alloy.

Moreover, the main body 51 and the lid body 52 of the ferrule 5 are completely separated in this embodiment. However, the main body 51 and the lid body 52 may be partially connected with each other. When the main body 51 and the 1id body 52 are partially connected with each other, they can be integrally handled. The working efficiency, such as assembly operation efficiency of the optical wiring part 10, can be improved. In this case, it is preferable that a connection part between the main body 51 and the lid body 52 have flexibility as high as possible. Specifically, the connection part may be made of a rubber material, a resin material, or the like. When the connection part is made of the same material as that of the ferrule 5, and the connection part is made by a fine linear part to decrease the rigidity, essentially the same functions and effects as those which are obtained in a case that the main body 51 and the lid body 52 are separated can be obtained.

(Adhesive layer)

The constituent material of the adhesive layer 55 and 56 are, for example, a cured adhesive agent or a cured bonding sheet.

Examples of the adhesive agent include an epoxy-based adhesive agent, an acrylic-based adhesive agent, an urethane-based adhesive agent, a silicone-based adhesive agent, and an olefin-base adhesive agent, and various hot melt adhesive agents (a polyester-based hot melt adhesive agent, a modified olefin-based hot melt adhesive agent).

Examples of the constituent material of the bonding sheet include a bisphenol-type epoxy resin, such as a bisphenol A epoxy resin, a bisphenol F epoxy resin, a bisphenol AD epoxy resin, and a bisphenol S epoxy resin, a novolak epoxy resin, such as a phenol novolak epoxy resin, and a cresol novolak epoxy resin, an aromatic epoxy resin such as a trisphenol methane triglycidyl ether, various epoxy resins, such as a naphtalene type epoxy resin, and a dicyclopentadiene type epoxy resin, an imide resin, such as polyimide and polyamideimide, a silicone resin, a phenol resin, and a urea resin. The resin may be used alone or in combination of two or more.

In addition to the thermosetting resins above, the constituent material of the bonding sheet may further include rubber, such as acrylonitrile-butadiene rubber (NBR), carboxyl-terminated NBR (CTBN), styrene-butadiene rubber (SBR), polybutadiene, and acrylic rubber, and a thermoplastic resin, such as a vinyl acetate resin, a polyvinyl alcohol resin, a polyvinyl acetal resin, an acrylic resin, a polyacrylonitrile resin, a vinyl urethane resin, a polyester resin, and a polyamide resin. The amount of the rubber and the thermoplastic resin relative to 100 parts by mass of the themosetting resin is preferably about 10 to about 200 parts by mass, and more preferably about 20 to about 150 parts by mass.

The elongation modulus (Young's modulus) of the adhesive layer 55 and 56 slightly varies depending on the size of the optical waveguide 1, the clearance L2, or the like, and is preferably about 100 MPa to about 20,000 MPa, more preferably about 300 MPa to about 15,000 MPa, still more preferably about 500 MPa to about 12,500 MPa, and most preferably about 1,000 MPa to about 10,000 MPa. When the elongation modulus of the adhesive layer 55 and 56 is adjusted to be in the above-identified range, the stress concentration in the optical waveguide 1 is reliably reduced, and the increase of the transmission loss is inhibited, while the optical waveguide is reliably fixed to the ferrule 5.

Moreover, the elongation modulus of the adhesive layer 55 and 56 is measured in accordance with JIS K 7127, and the measurement temperature is set to 25°C.

In addition, the glass-transition temperature of the adhesive layer 55 and 56 is preferably about 30°C to about 180°C, and more preferably about 35°C to about 140°C. When the glass-transition temperature of the adhesive layer 55 and 56 is adjusted to be in the above-identified range, the heat resistance of the optical wiring part 10 can be further improved.

Moreover, the glass-transition temperature of the adhesive layer 55 and 56 is measured by a dynamic viscoelasticity determination method (DMA method).

The side surfaces 103 and 103 of the optical waveguide 1 are positioned apart from the side surfaces 5012 and 5012 of the groove 501, and there is a clearance between the two side surfaces of the optical waveguide 1 and the inner wall of the penetration hole 50 in this embodiment. As shown in FIG. 3A, it is preferable that the adhesive layers 55 and 56 be also positioned apart from the side surfaces 5012 and 5012 of the groove 501. Thereby, it is possible to reliably suppress the local stress concentration in the optical waveguide 1. In this case, the clearance between the side surfaces of the adhesive layers 55 and 56 and the side surfaces 5012 and 5012 of the groove 501 is set in the same manner as the clearance L1.

Second embodiment

The second embodiment of the optical wiring part according to the present invention will be explained below.

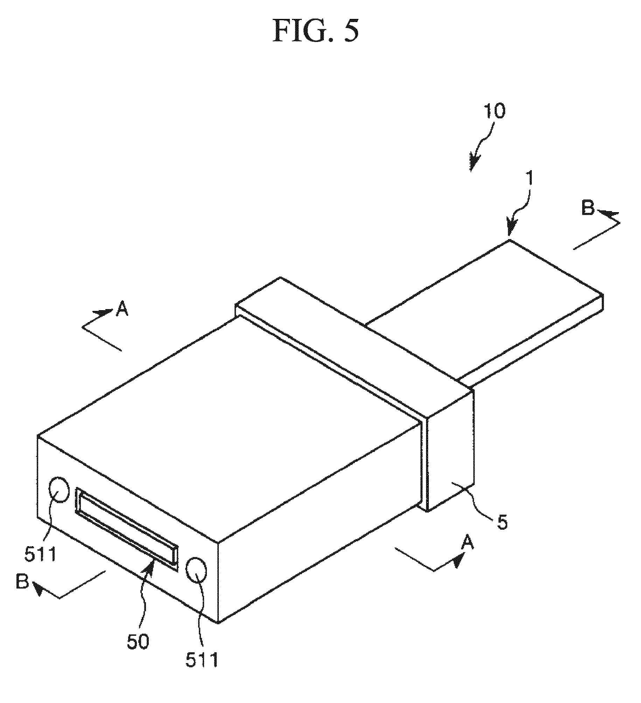

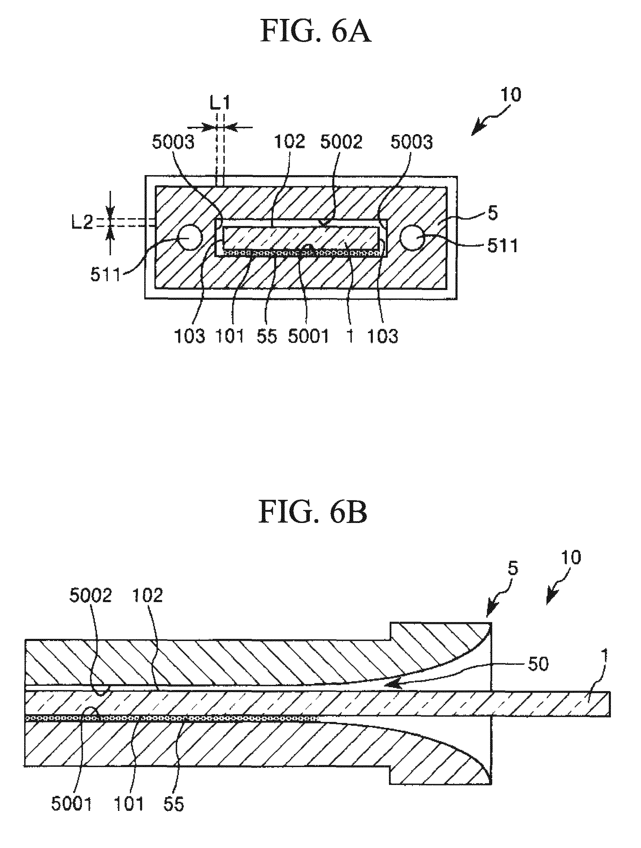

FIG. 5 is a perspective view showing the second embodiment of the optical wiring part according to the invention. FIG. 6A is a sectional view of the optical wiring part which is taken along line A-A of FIG. 5. FIG. 6B is a sectional view of the optical wiring part which is taken along line B-B of FIG. 5.

The second embodiment will be explained while focusing different components from the first embodiment, and the explanation about the same components as those in the first embodiment will be omitted. Moreover, the same components in FIGS. 5, 6A, and 6B as those in the first embodiment are represented by the same reference numbers, and the detail explanation of the components are omitted.

The optical wiring part of this embodiment has the same components as those of the first embodiment, except that the ferrule 5 has a different structure from the ferrule 5 in the first embodiment.

The main body 51 and the lid body 52 are not separated and integrated in the ferrule 5 shown in FIG. 5. Therefore, the ferrule 5 shown in FIG 5 does not have a clearance between the lid body 52 and the main body 51, which the ferrule shown in FIG 1 includes.

The ferrule 5 shown in FIG. 5 has the penetrate hole 50 from the base end to the tip end of the ferrule 5. The tip end of the optical waveguide 1 is inserted into the penetration hole 50. Among the inner wall of the penetration hole 50 shown in FIG 5, the bottom inner wall is represented by "bottom surface 5001", the upper inner wall is represented by "upper surface 5002", and the side inner wall is represented by "side surface 5003". In the ferrule 5 shown in FIG. 5, the lower surface 101 of the tip end of the optical waveguide 1 and the bottom surface 5001 of the penetration hole 50 are adhered by the adhesive layer 55 similar to the first embodiment. In addition, similar to the first embodiment, the side surfaces 103 and 103 of the tip end of the optical waveguide 1 are positioned apart from the side surfaces 5003 and 5003 of the penetration hole 50, and there is a clearance between the two side surfaces of the optical waveguide 1 and the inner wall of the penetration hole 50.

On the other hand, dissimilar to the first embodiment, the upper surface 102 of the tip end of the optical waveguide 1 is positioned apart from the upper surface 5002 of the penetration hole 50, and there is a clearance between them.

The optical wiring part 10 having such a structure has the same functions and effects as those of the optical wiring part 10 of the first embodiment.

In addition, since the main body 51 and the lid body 52 of the ferrule 5 are integrated, the handling in the assembly operation of the optical wiring part 10 is improved, and working efficiency can be improved.

Furthermore, the clearance L2 between the upper surface 102 of the optical wavelength 1 and the upper surface 5002 of the penetration hole 50 is preferably about 30 to about 300% of the clearance L1 between the side surface 103 of the optical waveguide1 and the side surface 5003 of the penetration hole 50, and more preferably about 50 to about 200%. When the ratio L2/L1 is in the above-identified range, it is possible to reliably fix the optical waveguide 1 in the ferrule 5 with high accuracy.

It is possible to improve the smoothness (slidability) between the optical waveguide 1 and the penetration hole 50 by subjecting the upper surface 102 of the optical waveguide 1 or the upper surface 5002 of penetration hole 50. Thereby, it is possible to obtain the effects explained above even when the clearance L2 is made smaller. Specifically, it is possible to shift the above-identified range of the clearance L2 to a narrower range, 0.001 $\mu$m to 1,000 $\mu$m, more preferably 0.1 $\mu$m to 500 $\mu$m, and most preferably 1 $\mu$m to 200 $\mu$m by subjecting by subjecting the upper surface 102 of the optical waveguide 1 or the upper surface 5002 of penetration hole 50. Thereby, it is possible to improve the design freedom of the optical wiring part 10 as well as the stress concentration is certainly reduced.

Moreover, the thickness of the adhesive layer 55 is preferably equal to the clearance L2 or less. When the thickness of the adhesive layer 55 is equal to the clearance Ls or less, it is possible to suppress the inclination of the optical waveguide 1 depending on the variation of the thickness of the adhesive layer 55.

Third embodiment

Below, the third embodiment of the optical wiring part according to the present invention is explained.

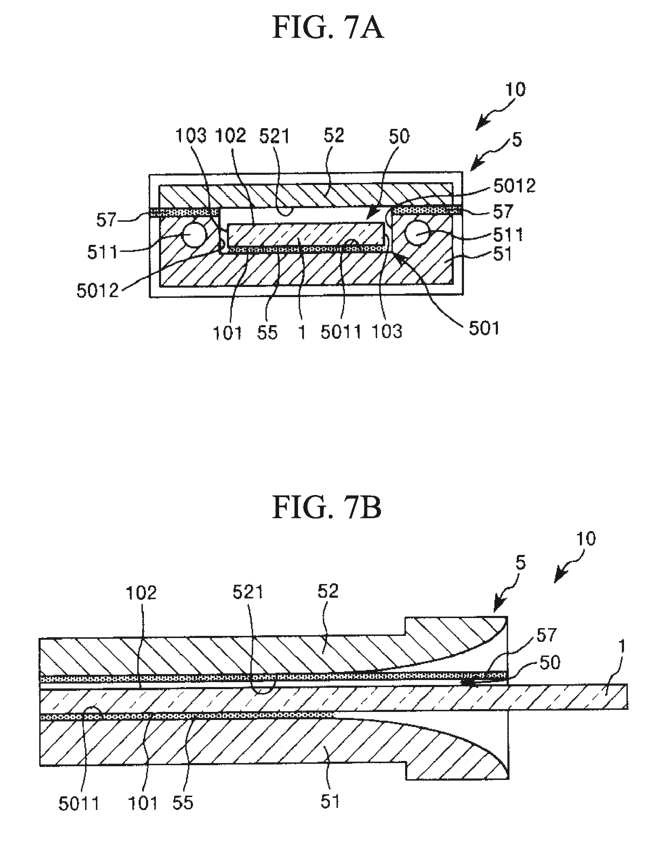

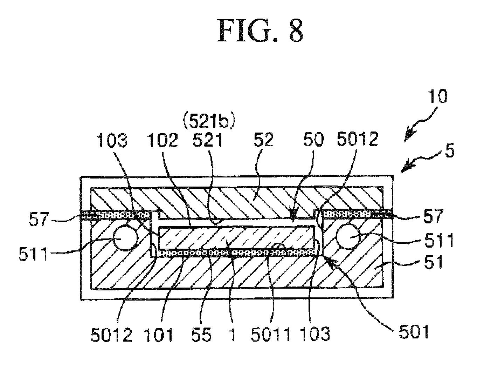

FIG. 7A shows a third embodiment of the optical wiring part, and is a sectional view showing the optical wiring part when the ferrule is cut in an orthogonal direction relative to a longitudinal direction of the ferrule. FIG. 7B is a sectional view showing an optical wiring part when the ferrule is cut in a longitudinal direction of the ferrule. FIG. 8 is a sectional view showing an alternative optical wiring part shown in FIG. 7.

The third embodiment will be explained while focusing different components from the first and second embodiments, and the explanation about the same components as those in the first and second embodiments will be omitted. Moreover, the same components in FIGS. 7A, 7B, and 8, as those in the first embodiment are represented by the same reference numbers, and the detail explanation of the components are omitted.

The optical wiring part of this embodiment has the same components as those of the first embodiment, except that the ferrule 5 has a different structure from the ferrule 5 in the first embodiment.

In the ferrule 5 shown in FIGS.7A and 7B, the upper surface of the main body 51 and the lower surface 521 of the lid body 52 are adhered and fixed via an adhesive layer 57. In addition, the upper surface 102 of the optical waveguide 1 is positioned apart from the lower surface 521 of the lid body 52, and there is a clearance between them.

In the ferrule 5 having such a structure, the clearance between the upper surface 102 of the optical waveguide 1 and the lower surface 521 of the lid body 52 can be easily adjusted by suitably changing the thickness of the adhesive layer 57. Therefore, it is possible to flexibly change the clearance between the upper surface 102 of the optical waveguide 1 and the lower surface 521 of the lid body 52 depending on the thickness of the optical waveguide 1 inserted into the penetration hole 50 in the ferrule 5 shown in FIGS. 7A and 7B. The optical wiring part 10 has high general usefulness.

The optical wiring part 10 having such a structure has the same functions and effects as those in the first and second embodiments.

In addition, a part of the lower surface 521 of the lid body 52 may protrude downwardly as shown in FIG. 8. When a part (protrusion portion 521b in FIG. 8) of the lower surface 521 of the lid body 52 protrudes downwardly, the clearance between the upper surface 102 of the optical waveguide 1 and the lower surface 521 of the lid body 52 can be adjusted by changing the protrusion amount of the protrusion portion 521b. Therefore, it is possible to change the clearance between the upper surface 102 of the optical waveguide 1 and the lower surface 521 of the 1id body 52 depending on the thickness of the optical waveguide 1 inserted into the penetration hole 50 in the ferrule 5 shown in FIGS. 8. The optical wiring part 10 has high general usefulness.

In addition, since the protrusion portion 521b is housed in the groove 501, the positioning between the main body 51 and the lid body 52 is facilitated.

Fourth embodiment

Below, the fourth embodiment of the optical wiring part according to the present invention will be explained.

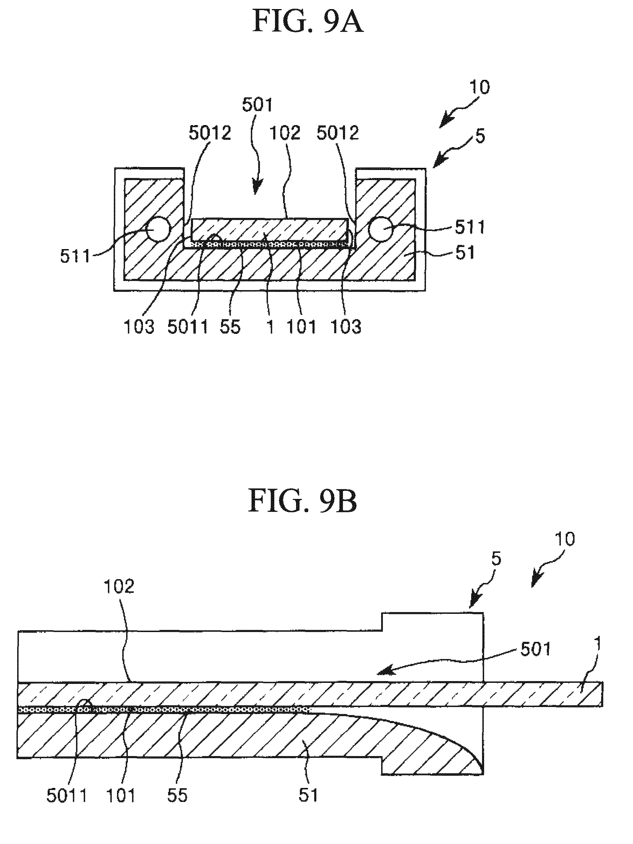

FIG. 9A shows the fourth embodiment of the optical wiring part according to the present invention, and is a sectional view showing an optical wiring part when the ferrule is cut in an orthogonal direction relative to a longitudinal direction of the ferrule. FIG. 9B is a longitudinal sectional showing the optical wiring part.

The fourth embodiment will be explained while focusing different components from the first to third embodiments, and the explanation about the same components as those in the first embodiment will be omitted. Moreover, the same components in FIGS. 9A and 9B as those in the first embodiment are represented by the same reference components, and the detail explanation of the components are omitted.

The optical wiring part of this embodiment has the same components as those of the first embodiment, except that the ferrule 5 has a different structure from the ferrule 5 in the first embodiment.

The ferrule 5 shown in FIGS. 9A and 9B has a structure in which the lid body 52 is omitted from the ferrule 5 shown in FIG. 3. Both the side surfaces 103 and 103 at the tip end of the optical waveguide 1 are positioned apart from the inner wall of the groove 501, and there is a clearance between them in the ferrule 5. In addition, the lower surface 101 at the tip end of the optical waveguide 1 is fixed to the bottom surface 5011 of the groove 501 via an adhesive layer 55. The upper surface 102 of the optical waveguide 1 at the tip end faces the upper opening of the groove 501.

The optical wiring part of this embodiment has the same functions and effects as those of the first to third embodiments.

In addition, the groove 501 may be filled with a filler if necessary. In this case, the filler is not enter in the clearance between both the side surface 103 and 103 at the tip end of the optical waveguide 1 and the side walls 5012 and 5012 of the groove 501. When a curable filler is used, it is possible to prevent the curable filler from entering the clearance by optimizing the fluidity of the filler before curing. In addition, a spacer may be inserted into the clearance, the filler may be filled in the groove while inserting the spacer, and the spacer may be removed after curing.

<Electronic device>

As explained above, the decrease of the transmission efficiency is suppressed in the optical wiring part when the optical waveguide is connected with another optical part. Therefore, it is possible to obtain an electronic device (electronic device of the present invention) which can optically communicate with high quality, and has high reliability by using the optical wiring part according to the present invention.

Examples of the electronic device having the optical wiring part according to the present invention include a mobile phone, a game machine, a router device, a WDM device, a personal computer, a television, and a home server. In these electronic devices, it is necessary to transmit large data between an arithmetic unit, such as LSI, and a memory unit, such as RAM. Therefore, when the electronic device has the optical wiring part according to the present invention, it is possible to remove defects, such as noise specific to electric wirings, and signal degradation, and remarkable improvement of the performance can be expected.

In addition, the calorific value can be drastically reduced in the optical waveguide compared with electric wirings. Therefore, electric power for cooling is largely reduced. The electricity consumption of entire electronic device can also be reduced.

The optical wiring part and the electronic device having the optical wiring part according to the present invention are explained based on the embodiments together with figures. However, the present invention is not limited to the embodiments and figures.

For example, the ferrule is provided with one end of the optical waveguide in the embodiments. A different ferrule, or a connector may be provided with the other end of the optical waveguide. In addition, a light emitting and receiving element may be mounted at an optical path conversion portion. Furthermore, the ferrule or the like may not be mounted at the other end of the optical waveguide.

EXAMPLES

Next, the invention will be described in further detail with reference to examples.

1. Manufacturing an optical wiring pat

(Example 1)

An epoxy-based adhesive agent (Young's modulus: 2,000 MPa) was coated to the upper and lower surfaces at the tip end of an optical waveguide made of a norbornene resin. The optical waveguide has 80 mm in length and 48 core portions.

A ferrule having a shape shown in FIG. 2 which was made of polyphenylene sulfide (PPS) was prepared. Then, the tip end of the optical waveguide was housed in a groove formed in a main body of the ferrule. At this time, the tip end surface of the optical waveguide and the tip end surface of the ferrule were aligned with each other.

After that, a lid body was mounted on the optical waveguide. Then, the adhesive was cured. Thereby, the assembly operation was completed, and an optical wiring part shown in FIGS. 1, 3A, and 3B was obtained.

Moreover, when a clearance L1 between the side surfaces of the optical waveguide and the side surfaces of the lid body and a clearance L1 between the side surfaces of the optical waveguide and the side surfaces of the groove were measured, the clearance L1 was 200 $\mu$m.

When a clearance between the lower surface of the optical waveguide and the bottom surface of the groove, and a clearance L2 (that is, the thickness of the adhesive layer) between the upper surface of the optical waveguide and the lower surface of the lid body were measured, the clearance were 10 $\mu$m.

(Example 2)

The optical waveguide was obtained in a manner identical to that of Example 1, except that the clearance the clearance L1 between the side surfaces of the optical waveguide and the side surfaces of the lid body, and the clearance L1 between the side surfaces of the optical waveguide and the side surfaces of the groove were changed to 350 $\mu$m.

(Example 3)

The optical waveguide was obtained in a manner identical to that of Example 1, except that the clearance the clearance L1 between the side surfaces of the optical waveguide and the side surfaces of the lid body, and the clearance L1 between the side surfaces of the optical waveguide and the side surfaces of the groove were changed to 500 $\mu$m.

(Example 4)

The optical waveguide was obtained in a manner identical to that of Example 1, except that the clearance L1 between the side surfaces of the optical waveguide and the side surfaces of the lid body, and the clearance L1 between the side surfaces of the optical waveguide and the side surfaces of the groove were changed to 100 $\mu$m respectively.

(Example 5)

The optical waveguide was obtained in a manner identical to that of Example 1, except that the clearance the clearance L1 between the side surfaces of the optical waveguide and the side surfaces of the lid body, and the clearance L1 between the side surfaces of the optical waveguide and the side surfaces of the groove were changed to 200 $\mu$m.

(Example 6)

An epoxy-based adhesive agent (Young's modulus: 2,000 MPa) was coated to the lower surface at the tip end of the same optical waveguide as that of Example 1.

Then, a ferrule having a shape shown in FIGS. 6A and 6B was prepared, and the tip end of the optical waveguide was inserted into a penetration hole formed in the main body of the ferrule. At this time, the tip end surface of the optical waveguide and the tip end surface of the ferrule were aligned with each other.

After that, the adhesive was cured. Thereby, the assembly operation was completed, and an optical wiring part shown in FIG. 5 was obtained.

Moreover, when a clearance L1 between the side surfaces of the optical waveguide and the side surfaces of the penetration hole was measured, the clearance L1 was 200 $\mu$m.

When a clearance between the lower surface of the optical waveguide and the bottom surface of the groove, that is, the thickness of the adhesive layer, was measured, the clearance was 5 $\mu$m.

In addition, when a clearance between the upper surface of the optical waveguide and the upper surface of the penetration hole was measured, the clearance was 200 $\mu$m.

(Example 7)

The optical waveguide was obtained in a manner identical to that of Example 6, except that the clearance L1 between the side surfaces of the optical waveguide and the side surfaces of the penetration hole was changed to 300 $\mu$m, and the clearance between the upper surface of the optical waveguide and the upper surface of the penetration hole was changed to 450 $\mu$m.

(Example 8)

An epoxy-based adhesive agent (Young's modulus: 2,000 MPa) was coated to the lower surface at the tip end of the same optical waveguide as that of Example 1.

A ferrule having a shape shown in FIGS. 7A and 7B which was made of polyphenylene sulfide (PPS) was prepared. Then, the tip end of the optical waveguide was housed in a groove formed in a main body of the ferrule. At this time, the tip end surface of the optical waveguide and the tip end surface of the ferrule were aligned with each other.

After that, a lid body was adhered to the main body of the ferrule. The adhesive agent used to adhere between the lid body and the main body was also the above-identified epoxy-based agent. After that, the adhesive agent was cured. Thereby, the assembly operation was completed, and an optical wiring part shown in FIGS. 7A and 7B was obtained.

Moreover, when a clearance between the side surfaces of the optical waveguide and the side surfaces of the penetration hole in the optical wiring parts obtained was measured, the clearance was 250 $\mu$m.

When a clearance between the lower surface of the optical waveguide and the bottom surface of the penetration hole, that is, the thickness of the adhesive layer, was measured, the clearance was 5 $\mu$m.

In addition, when a clearance between the upper surface of the optical waveguide and the upper surface of the penetration hole was measured, the clearance was 500 $\mu$m.

(Example 9)

The optical waveguide was obtained in a manner identical to that of Example 8, except that the clearance between the side surfaces of the optical waveguide and the side surfaces of the penetration hole was changed to 150 $\mu$m, and the clearance between the upper surface of the optical waveguide and the upper surface of the penetration hole was changed to 250 $\mu$m.

(Example 10)

An epoxy-based adhesive agent (Young's modulus: 2,000 MPa) was coated to the lower surface at the tip end of the same optical waveguide as that of Example 1.

A ferrule having a shape shown in FIGS. 9A and 9B which was made of polyphenylene sulfide (PPS) was prepared. Then, the tip end of the optical waveguide was housed in a groove formed in the ferrule. At this time, the tip end surface of the optical waveguide and the tip end surface of the ferrule were aligned with each other.

After that, the adhesive agent was cured. Thereby, the assembly operation was completed, and an optical wiring part shown in FIGS. 9A and 9B was obtained.

Moreover, when a clearance between the side surfaces of the optical waveguide and the side surfaces of the groove in the optical wiring parts obtained was measured, the clearance was 200 $\mu$m.

When a clearance between the lower surface of the optical waveguide and the bottom surface of the groove, that is, the thickness of the adhesive layer, was measured, the clearance was 5 $\mu$m.

(Example 11)

The optical waveguide was obtained in a manner identical to that of Example 10, except that the clearance between the side surfaces of the optical waveguide and the side surfaces of the groove was changed to 350 $\mu$m.

(Example 12)

A fluorine-based coating agent (Novec 1720, marketed by Sumitomo 3M) was coated to the upper and side surfaces at the tip end of the same optical waveguide as that of Example 1.

An optical wiring part was produced in a manner identical to that of Example 6 using the optical wavelength coated with the coating agent.

When a clearance L1 between the side surfaces of the optical waveguide and the side surfaces of the penetration hole was measured, the clearance was 10 μm.

In addition, when a clearance between the lower surface of the optical waveguide and the bottom surface of the penetration hole, that is, the thickness of the adhesive layer, was measured, the clearance was 5 μm.

Furthermore, when a clearance between the upper surface of the optical waveguide and the upper surface of the penetration hole was measured, the clearance was 1 nm.

(Example 13)

A fluorine-based coating agent (Novec 1720, marketed by Sumitomo 3M) was coated to the upper and side surfaces at the tip end of the same optical waveguide as that of Example 1.

An optical wiring part was produced in a manner identical to that of Example 6 using the optical wavelength coated with the coating agent.

When a clearance L1 between the side surfaces of the optical waveguide and the side surfaces of the penetration hole was measured, the clearance L1 was 100 nm.

In addition, when a clearance between the lower surface of the optical waveguide and the bottom surface of the penetration hole, that is, the thickness of the adhesive layer, was measured, the clearance was 5 μm.

Furthermore, when a clearance between the upper surface of the optical waveguide and the upper surface of the penetration hole was measured, the clearance was 10 nm.

(Example 14)

The optical waveguide was obtained in a manner identical to that of Example 1, except that an acrylic-based adhesive agent (Young's modulus: 3,000 MPa) was used instead of the epoxy-based adhesive agent.

(Comparative Example 1)

The optical waveguide was obtained in a manner identical to that of Example 1, except that the ferrule having a shape shown in FIG. 2 was used, the epoxy-based adhesive agent (Young's modulus: 2,000 MPa) was filled in a clearance between the side surfaces of the lid body and the side surfaces of the groove to adhere the optical waveguide and ferrule.

(Comparative Example 2)

The optical waveguide was obtained in a manner identical to that of Example 1, except that the ferrule having a shape shown in FIG. 2 was used, and the epoxy-based adhesive agent (Young's modulus: 2,000 MPa) was filled in a clearance between the optical waveguide and the groove, a clearance between the optical waveguide and the lid body, and a clearance between the lid body and the main body to adhere the optical waveguide and the ferrule.

(Comparative Example 3)

The optical waveguide was obtained in a manner identical to that of Example 6, except that the ferrule having a shape shown in FIG. 6 was used, the epoxy-based adhesive agent (Young's modulus: 2,000 MPa) was filled in a clearance between the optical wavelength and the penetration hole to adhere the optical waveguide and the ferrule.

(Comparative Example 4)

The optical waveguide was obtained in a manner identical to that of Example 8, except that the ferrule having a shape shown in FIG. 7 was used, the epoxy-based adhesive agent (Young's modulus: 2,000 MPa) was filled in a clearance between the optical wavelength and the groove and a clearance between the optical wavelength and the lid body to adhere the optical waveguide and the ferrule.

(Comparative Example 5)

The optical waveguide was obtained in a manner identical to that of Example 10, except that the ferrule having a shape shown in FIG. 9 was used, the epoxy-based adhesive agent (Young's modulus: 2,000 MPa) was filled in a clearance between the optical wavelength and the groove to adhere the optical waveguide and the ferrule.

2. Evaluation of optical wiring part

2.1 Temperature cycle test

The optical wiring part prepared in Examples and Comparative Examples was subjected to a temperature cycle test of 100 cycles, 500 cycles, and 1,000 cycles in a range of -40°C to 85°C.

Moreover, 1 cycle has the following first step to fourth step.

First step: The optical wiring part is maintained at -40°C for 10 minutes.
Second step: The temperature of the optical wiring part is raised from -40°C to 85°C for 12.5 minutes.
Third step: The optical wiring part is maintained at 85°C for 10 minutes.
Fourth step: The temperature of the optical wiring part is dropped from 85°C to -40°C for 12.5 minutes.

After the temperature cycle test, the insertion loss of the optical wiring part was measured, and the optical wiring part was evaluated in accordance with the following evaluation standards. The results of the evaluation were shown in Table 1.

<Evaluation standards>

Good: The insertion loss is 0.2 dB or less.
Inferior: The insertion loss is more than 0.2 dB, and 0.5 dB or less.
Bad: The insertion loss exceeds 0.5 dB.

Moreover, Table 1 also shows the results of the temperature cycle test of the optical wavelength alone as a reference.

2.2 High temperature and high humidity test

The optical wiring part prepared in Examples and Comparative Examples was left to stand under conditions in which the temperature was 85°C, and the humidity was 85%RH for 500 hours, 1,000 hours, and 2,000 hours.

After the high temperature and high humidity test, the insertion loss of the optical wiring part was measured under high temperature and high humidity conditions, and the optical wiring part was evaluated in accordance with the following evaluation standards. The results of the evaluation were shown in Table 1.

<Evaluation standards>

Good: The insertion loss is 0.2 dB or less.
Inferior: The insertion loss is more than 0.2 dB, and 0.5 dB or less.
Bad: The insertion loss exceeds 0.5 dB.

Moreover, Table 1 also shows the results of the high temperature and high humidity test of the optical wavelength alone as a reference.

Table 1

| | Shape of Ferrule | Temperature cycle test (Number of cycle) | | | High temperature and high humidity test (hours) | | |
|---|---|---|---|---|---|---|---|
| | | 100 | 500 | 1000 | 500 | 1000 | 2000 |
| Example1 | FIG.3 | Good | Good | Good | Good | Good | Good |
| Example2 | FIG.3 | Good | Good | Good | Good | Good | Good |
| Example3 | FIG.3 | Good | Good | Good | Good | Good | Good |
| Example4 | FIG.3 | Good | Good | Good | Good | Good | Good |

(continued)

| | Shape of Ferrule | Temperature cycle test (Number of cycle) | | | High temperature and high humidity test (hours) | | |
|---|---|---|---|---|---|---|---|
| | | 100 | 500 | 1000 | 500 | 1000 | 2000 |
| Example5 | FIG.3 | Good | Good | Good | Good | Good | Good |
| Example6 | FIG.6 | Good | Good | Good | Good | Good | Good |
| Example7 | FIG.6 | Good | Good | Good | Good | Good | Good |
| Example8 | FIG.7 | Good | Good | Good | Good | Good | Good |
| Example9 | FIG.7 | Good | Good | Good | Good | Good | Good |
| Example10 | FIG.9 | Good | Good | Good | Good | Good | Good |
| Example11 | FIG.9 | Good | Good | Good | Good | Good | Good |
| Example12 | FIG.6 | Good | Good | Good | Good | Good | Good |
| Example 13 | FIG.6 | Good | Good | Good | Good | Good | Good |
| Example 14 | FIG.2 | Good | Good | Good | Good | Good | Good |
| Comparative Example1 | FIG.2 | Bad | Bad | Bad | Good | Good | Inferior |
| Comparative Example2 | FIG.2 | Bad | Bad | Bad | Good | Inferior | Bad |
| Comparative Example3 | FIG.6 | Bad | Bad | Bad | Good | Inferior | Bad |
| Comparative Example4 | FIG.7 | Bad | Bad | Bad | Good | Inferior | Bad |
| Comparative Example5 | FIG.9 | Bad | Bad | Bad | Good | Inferior | Bad |
| Reference | None | Good | Good | Good | Good | Good | Good |

It is clear from Table 1 that the optical wiring part of Examples had excellent durability after the temperature cycle test and did not have remarkable increase of the insertion loss after the high temperature and high humidity test.

In contrast, the optical wiring part of Comparative Examples had large insertion loss and many peelings after the temperature cycle test, and remarkable increase of the insertion loss after the high temperature and high humidity test.

From the above, it was confirmed that according to the present invention, it is possible to produce the optical wiring part which can connect the optical waveguide to another optical element with high optical coupling efficiency while inhibiting the decrease of the transmission efficiency under severe conditions.

Moreover, an optical wiring part was produced in a manner identical to that of Examples and Comparative Examples using a bonding sheet instead of the epoxy-based adhesive agent. When the optical wiring part produced by using the bonding sheet was evaluated, the results showing the same tends as those of using the epoxy-based adhesive agent were obtained.

INDUSTRIAL APPLICABILITY

The optical wiring part according to the present invention can connect the optical waveguide and another optical element with high optical coupling efficiency while inhibiting the decrease of the transmission loss.

In addition, the electronic device according to the present invention has high reliability.

DESCRIPTION OF THE REFERENCE SIGNS

1                Optical waveguide

| 101 | Lower surface |
| 102 | Upper surface |
| 103 | Side surface |
| 10 | Optical wiring part |
| 11 and 12 | Clad layer |
| 13 | Core layer |
| 14 | Core portion |
| 15 | Side clad portion |
| 2 | Support film |
| 3 | Cover film |
| 5 | Ferrule |
| 50 | Penetration hole |
| 5001 | Bottom surface |
| 5002 | Upper surface |
| 5003 | Side surface |
| 501 | Groove |
| 5011 | Bottom surface |
| 5011a | Curved surface |
| 5012 | Side surface |
| 51 | Main body |
| 511 | Guide hole |
| 52 | Lid body |
| 521 | Lower surface |
| 521a | Curved surface |
| 521b | Protrusion portion |
| 55, 56, and 57 | Adhesive layer |

**Claims**

1. An optical wiring part including a tape-shaped optical waveguide and a ferrule having a penetration hole which is formed from a base end to a tip end of the ferrule, and a part of the optical waveguide in a longitudinal direction is inserted into the penetration hole,
   wherein at least one main surface of two main surfaces of the optical waveguide is fixed to an inner wall of the penetration hole, and there is a clearance between the inner wall of the penetration hole and two side surfaces of the optical waveguide.

2. The optical wiring part according to Claim 1, wherein the ferrule includes a main body having a groove which is a part of the penetration hole, and a lid body which forms the penetration hole together with the groove by covering an opening of the groove, and
   one main surface of two main surfaces of the optical waveguide is fixed to an inner wall of the groove, and the other main surface of the optical waveguide is fixed to the lid body.

3. The optical wiring part according to Claim 2, wherein the lid body covers the opening of the groove in a state that at least a part of the lid body is housed in the groove.

4. The optical wiring part according to Claim 3, wherein the lid body is positioned apart from the inner wall of the groove.

5. The optical wiring part according to Claim 1, wherein the ferrule includes a main body having a groove which is a part of the penetration hole, and a lid body which forms the penetration hole together with the groove by covering an opening of the groove, and
   the lid body is fixed to the main body except that the groove.

6. An optical wiring part including a tape-shaped optical waveguide and a ferrule having a groove which is formed from a base end to a tip end of the ferrule, and a part of the optical waveguide in a longitudinal direction is inserted into the groove,
   wherein at least one main surface of two main surfaces of the optical waveguide is fixed to an inner wall of the groove, and there is a clearance between the inner wall of the groove and two side surfaces of the optical waveguide.

**7.** An electronic device including the optical wiring part according to any one of Claims 1 to 6.

# FIG. 1

# FIG. 2

# FIG. 3A

# FIG. 3B

FIG. 4

# FIG. 5

# FIG. 6A

# FIG. 6B

# FIG. 7A

# FIG. 7B

# FIG. 8

# FIG. 9A

# FIG. 9B

## INTERNATIONAL SEARCH REPORT

| International application No. |
|---|
| PCT/JP2013/081524 |

A. CLASSIFICATION OF SUBJECT MATTER
*G02B6/40*(2006.01)i, *G02B6/122*(2006.01)i, *G02B6/30*(2006.01)i

According to International Patent Classification (IPC) or to both national classification and IPC

B. FIELDS SEARCHED

Minimum documentation searched (classification system followed by classification symbols)
G02B6/12-6/43

Documentation searched other than minimum documentation to the extent that such documents are included in the fields searched
Jitsuyo Shinan Koho       1922-1996   Jitsuyo Shinan Toroku Koho   1996-2013
Kokai Jitsuyo Shinan Koho  1971-2013   Toroku Jitsuyo Shinan Koho   1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2012-168294 A  (Nitto Denko Corp.),<br>06 September 2012 (06.09.2012),<br>entire text; fig. 1 to 3<br>& US 2012/0205825 A1    & CN 102636844 A | 1-4,6,7<br>5 |
| X<br>Y | JP 2010-243946 A  (Sumitomo Bakelite Co., Ltd.),<br>28 October 2010 (28.10.2010),<br>paragraphs [0024], [0055] to [0057], [0076] to [0078]; fig. 1, 4<br>(Family: none) | 1-4,6,7<br>5 |
| X<br>A | JP 8-262266 A  (Fujikura Ltd.),<br>11 October 1996 (11.10.1996),<br>paragraphs [0016], [0017]; fig. 2<br>(Family: none) | 1,7<br>2-6 |

☒  Further documents are listed in the continuation of Box C.　　☐  See patent family annex.

| * | Special categories of cited documents: |
|---|---|
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    06 December, 2013 (06.12.13) | Date of mailing of the international search report<br>    14 January, 2014 (14.01.14) |
|---|---|
| Name and mailing address of the ISA/<br>    Japanese Patent Office | Authorized officer |
| Facsimile No. | Telephone No. |

Form PCT/ISA/210 (second sheet) (July 2009)

28

**INTERNATIONAL SEARCH REPORT**

International application No.

PCT/JP2013/081524

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2007-3659 A  (Matsushita Electric Works, Ltd.), 11 January 2007 (11.01.2007), entire text; fig. 1 to 4 (Family: none) | 5 |
| A | JP 2011-203284 A  (Fujitsu Ltd.), 13 October 2011 (13.10.2011), entire text; fig. 1 to 4 (Family: none) | 1-7 |

Form PCT/ISA/210 (continuation of second sheet) (July 2009)

**EP 2 927 721 A1**

**Patent documents cited in the description**

- JP 2012263479 A

- JP 2011075688 A